(19) **Europäisches Patentamt / European Patent Office / Office européen des brevets**

(11) **EP 3 045 293 B1**

(12) **EUROPEAN PATENT SPECIFICATION**

(45) Date of publication and mention of the grant of the patent:
**15.11.2017 Bulletin 2017/46**

(51) Int Cl.:
***B29C 67/00*** *(2017.01)*   ***B33Y 30/00*** *(2015.01)*

(21) Application number: **16151429.4**

(22) Date of filing: **15.01.2016**

(54) **PRINTING MODULE OF RAPID PROTOTYPING APPARATUS**

DRUCKMODUL EINER SCHNELLEN PROTOTYPENTWICKLUNGSVORRICHTUNG

MODULE D'IMPRESSION D'UN APPAREIL DE PROTOTYPAGE RAPIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2015 TW 104101599**

(43) Date of publication of application:
**20.07.2016 Bulletin 2016/29**

(73) Proprietor: **Microjet Technology Co., Ltd Hsinchu (TW)**

(72) Inventors:
• **Lo, Chin-Tien**
  **Science-based Industrial Park, Hsinchu (TW)**

• **Huang, Chi-Feng**
  **Science-based Industrial Park, Hsinchu (TW)**

(74) Representative: **2K Patentanwälte Blasberg Kewitz & Reichel Partnerschaft mbB Schumannstrasse 27 60325 Frankfurt am Main (DE)**

(56) References cited:
**EP-A1- 1 440 807        US-A1- 2002 079 601 US-A1- 2011 300 248**

**Description**

**FIELD OF THE INVENTION**

The present invention relates to a rapid prototyping apparatus, and more particularly to a printing module having plural modular ink cartridges of a rapid prototyping apparatus.

**BACKGROUND OF THE INVENTION**

As known, the rapid prototyping (RP) technology is developed from the concepts of forming a pyramid by stacking layers, and the main technical feature is to achieve fast formation. A complicated design can be transformed into a three-dimensional physical model automatically and fast without any cutting tools, molds and fixtures. Thus, the development cycle of new products and research and development cost are largely reduced to ensure the time to market for new products and the first-time-right ratio. Accordingly, a complete and convenient product design tool is provided between technicians and non-technicians (e.g. managers and users), and the product competitiveness and the quick reaction capability of enterprises in the market are improved obviously.

Recently, the rapid prototyping technology develops a method for producing three-dimensional physical models by combining an inkjet printing technology and a precise positioning technology of positioning the carriers. The producing method begins by first spreading a layer of powder on the carrier and then printing high viscosity liquid binder on part of the powder by using the inkjet printing technology, so that the liquid binder and the powder stick together to become solidified. After the above steps are repeatedly done, a three-dimensional physical model is produced by stacking multiple layers.

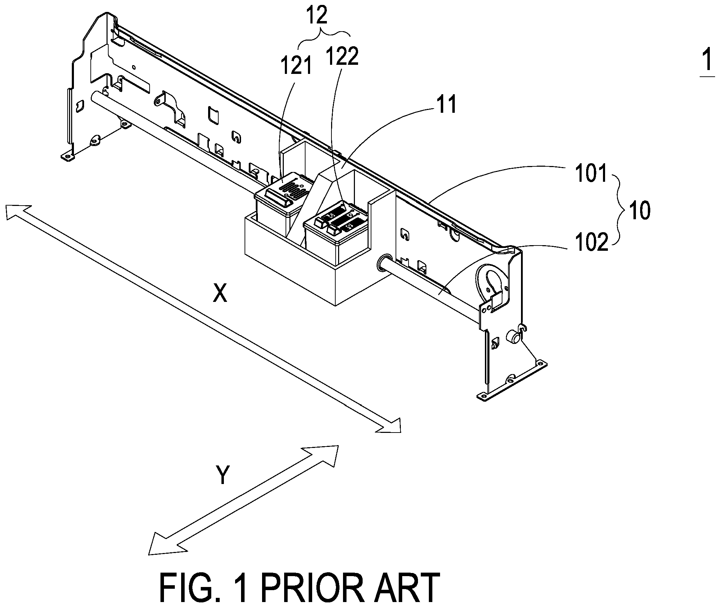

Conventionally, a printing module using the general inkjet printing technology and the rapid prototyping technology are collaboratively used to produce the three-dimensional physical model. FIG 1 schematically illustrates the architecture of a printing module using the general inkjet printing technology according to the prior art. As shown in FIG. 1, the printing module 1 using the general inkjet printing technology is installed on a main body (not shown) in order to perform an inkjet printing operation. The printing module 1 comprises an inkjet printing platform 10, a carrying seat 11 and at least one ink cartridge 12. The inkjet printing platform 10 comprises a bracket 101 and a transmission shaft 102. The transmission shaft 102 is spanned across the bracket 101. The carrying seat 11 is sheathed around the transmission shaft. 102. The at least one ink cartridge 12 includes two ink cartridges, as shown in FIG 1. Black ink is contained in a first ink cartridge 121 and color inks (for example cyan (C) ink, yellow (Y) ink, magenta (M) ink) are contained in a second ink cartridge 122. The at least one ink cartridge 12 is installed on the carrying seat 11. Consequently, the carrying seat 11 and the at least one ink cartridge 12 thereon can be moved relative to the transmission shaft 102 of the inkjet printing platform 10 along the X-axis in a reciprocating motion.

When the printing module 1 performs the inkjet printing operation according to the RP technology, the carrying seat 11 and the at least one ink cartridge 12 thereon are driven by the inkjet printing platform 10 and thus moved along the Y-axis in a reciprocating motion. Moreover, the carrying seat 11 and the at least one ink cartridge 12 are moved relative to the transmission shaft 102 of the inkjet printing platform 10 from left to right and from right to left along the X-axis in the reciprocating motion. As the reciprocating motions along the X-axis and the Y-axis are alternately performed, the color inks contained in the ink cartridge 12 are printed on a construction material (not shown), which is spread by a construction platform (not shown). After the above steps are repeatedly done, a three-dimensional physical model (not shown) is produced by stacking multiple layers.

However, when the inkjet printing operation is performed according to the RP technology, the ink cartridge 12 has to contain not only the black ink and the color ink but also the high-viscosity liquid binder in order to adhere the construction material and produce the three-dimensional physical model by stacking multiple layers. Hence, in the conventional inkjet printing method of the rapid prototyping apparatus, extra carrying seat and ink cartridge have to be employed for containing the high-viscosity liquid binder.

US-A-20110300248 discloses a printing module of a rapid prototyping apparatus according to the preamble of claim 1. The printing module of the rapid prototyping apparatus includes two ink cartridges disposed on a carrying seat. One ink cartridge contains the color ink, and another ink cartridge contains the binder. The color ink and the binder are contained in different ink cartridges.

Consequently, the entire size of the printing module 1 will be increased, and the cost of the carrying seat and the ink cartridge will be increased.

Therefore, there is a need of providing a printing module of a rapid prototyping apparatus in order to overcome the drawbacks encountered by the prior arts.

## SUMMARY OF THE INVENTION

It is an object of the present invention to provide an enhanced printing module of a rapid prototyping apparatus, which particularly enables performing a rapid prototyping printing process without adjusting the design of the original printing module and enabling the effects of fixing the size of the original printing module and reducing the printing cost.

This problem is solved by a printing module of a rapid prototyping apparatus as claimed by claim 1. Further advantageous embodiments are the subject-matter of the dependent claims.

The printing module has at least two modular ink cartridges, and each ink cartridge has three ink chambers. Two of the three ink chambers of a respective modular ink cartridge are configured to receive different color inks, respectively, and one of the three ink chambers of a respective modular ink cartridge is configured to receive a liquid binder, so as to perform a rapid prototyping printing process.

In accordance with an aspect of the present invention, there is provided a printing module of a rapid prototyping apparatus. The printing module includes a printing platform, a carrying seat and at least two modular ink cartridges. The printing platform has a frame and a driving shaft, and the driving shaft is installed on the frame. The carrying seat is penetrated by the driving shaft and disposed on the driving shaft. The two modular ink cartridges are disposed on the carrying seat. Each modular ink cartridge has a case body.

According to the present invention each modular ink cartridge has three ink chambers. The three ink chambers of each modular ink cartridge are divided within the case body for receiving different print liquids, respectively, and the case bodies of the at least two modular ink cartridges contain the same print liquid in at least one ink chamber for performing the rapid prototyping printing process.

The above contents of the present invention will become more readily apparent to those ordinarily skilled in the art after reviewing the following detailed description and accompanying drawings, in which:

## BRIEF DESCRIPTION OF THE DRAWINGS

FIG. 1 schematically illustrates the architecture of a printing module using the general inkjet printing technology according to the prior art;

FIG. 2 is a schematic view illustrating a printing module of a rapid prototyping apparatus according to a first embodiment of the present invention;

FIG. 3A is a schematic perspective view illustrating an ink cartridge of the printing module of the rapid prototyping apparatus according to the first embodiment of the present invention;

FIG. 3B is a schematic bottom view illustrating the ink cartridge of 3A;

FIG. 3C is a schematic cross-sectional view illustrating the ink cartridge of 3A;

FIG. 4A is a schematic top and cross-sectional view illustrating the ink cartridge of the printing module of the rapid prototyping apparatus according to the first embodiment of the present invention;

FIG. 4B is a cross-sectional view illustrating the ink cartridge of FIG. 4A and taken along line A-A';

FIG. 5A is another schematic top and cross-sectional view illustrating the ink cartridge of the printing module of the rapid prototyping apparatus according to the first embodiment of the present invention;

FIG. 5B is a cross-sectional view illustrating the ink cartridge of FIG. 5A and taken along line B-B';

FIG. 6 is a schematic view illustrating the ink cartridges of the printing module of the rapid prototyping apparatus according to the first embodiment of the present invention;

FIG. 7A is a schematic perspective view illustrating an inkjet chip of the ink cartridge of the printing module of the rapid prototyping apparatus according to the first embodiment of the present invention, wherein portion of the nozzle plate is removed;

FIG. 7B is a schematic top view illustrating an inkjet chip of the ink cartridge according to the first embodiment of the present invention, wherein the nozzle plate is removed;

FIG. 8 is a schematic view illustrating a control circuit of the inkjet chip of the ink cartridge of the printing module of the rapid prototyping apparatus according to the first embodiment of the present invention;

FIG. 9A is a schematic bottom view illustrating the ink cartridge according to a second embodiment of the present invention;

FIG. 9B is a schematic top and cross-sectional view illustrating the ink cartridge of FIG. 9A;

FIG. 9C is a cross-sectional view illustrating the ink cartridge of FIG. 9A and taken along line D-D';

FIG. 9D is a cross-sectional view illustrating the ink cartridge of FIG. 9A and taken along line E-E'; and

FIG. 10 is a schematic view illustrating the ink cartridges of the printing module of the rapid prototyping apparatus according to the second embodiment of the present invention.

**DETAILED DESCRIPTION OF THE PREFERRED EMBODIMENT**

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

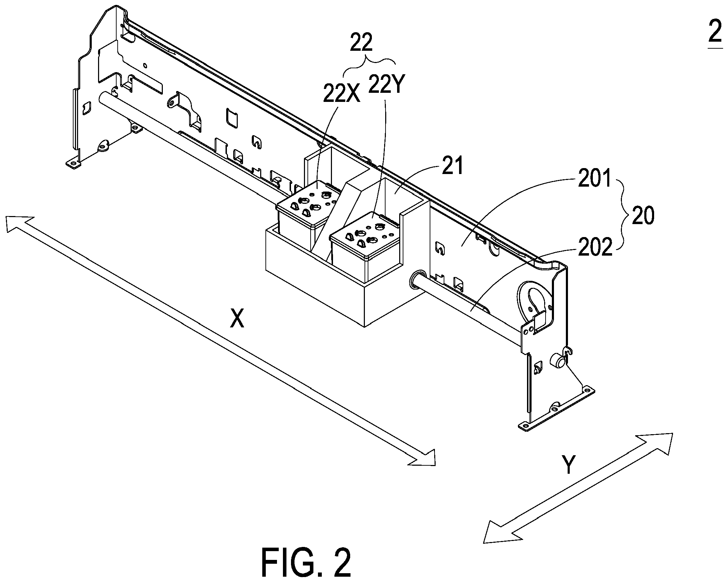

FIG. 2 is a schematic view illustrating a printing module of a rapid prototyping apparatus according to a first embodiment of the present invention. As shown in FIG. 2, the printing module 2 is used in a rapid prototyping apparatus (not shown), and includes a printing platform 20, a carrying seat 21 and a plurality of modular ink cartridges 22 (hereinafter also referred to as ink cartridge). The printing platform 20 has a frame 201 and a driving shaft 202, and the driving shaft 202 is installed on the frame 201. The carrying seat 21 is penetrated and disposed on the driving shaft 202. In the embodiment, the plural ink cartridges 22 are two identical modular ink cartridges 22X, 22Y correspondingly disposed on the carrying seat 21. Consequently, the carrying seat 21 and the two ink cartridges 22X, 22Y thereon can be moved relative to the transmission shaft 202 of the inkjet printing platform 20 along a single axis (i.e. the X-direction) in a reciprocating motion. The print liquids are contained in plural ink cartridges 22 so as to perform the rapid prototyping printing process.

When the printing module 2 performs the inkjet printing operation according to the RP technology, the carrying seat 21 and the two ink cartridges 22X, 22Y thereon are driven by the inkjet printing platform 20 and thus moved along the Y-axis in a reciprocating motion. Moreover, the carrying seat 21 and the two ink cartridges 22X, 22Y are moved relative to the transmission shaft 202 of the inkjet printing platform 20 from left to right and from right to left along the X-axis in the reciprocating motion. As the reciprocating motions along the X-axis and the Y-axis are alternately performed, the print liquids contained in the two ink cartridges 22X, 22Y are printed on a construction material (not shown), which is spread by a construction platform (not shown). After the above steps are repeatedly done, a three-dimensional physical model (not shown) is produced by stacking multiple layers.

In some embodiments, the print liquid is a liquid binder or a color ink. An example of the color ink includes but is not limited to a pigment-based ink or a dye-based ink. In some embodiments, the print liquid is colorless or monochromatic. An example of the print liquid includes but is not limited to a transparent liquid binder, a cyan (C) print liquid, a yellow (Y) print liquid, a magenta (M) print liquid, a light cyan print liquid, a magenta print liquid or a grayscale print liquid.

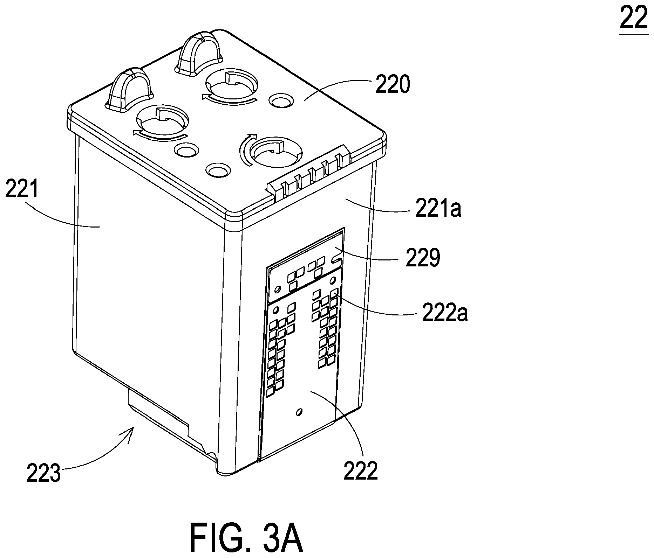

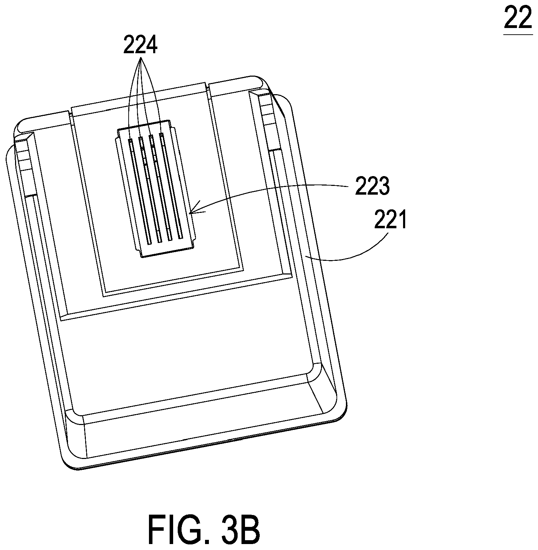

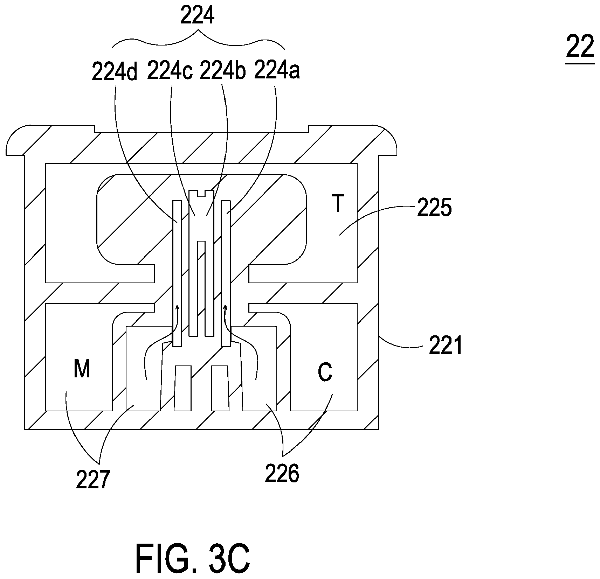

FIG. 3A is a schematic perspective view illustrating an ink cartridge of the printing module of the rapid prototyping apparatus according to the first embodiment of the present invention. FIG. 3B is a schematic bottom view illustrating the ink cartridge of FIG. 3A. FIG. 3C is a schematic cross-sectional view illustrating the ink cartridge of FIG. 3A. As shown in FIGS. 2 and 3A, the ink cartridge 22 of the printing module 2 includes a top cover 220, a case body 221, a flexible circuit board 222 and an inkjet chip 223. The top cover 220 is configured to cover the top of the case body 221. The inkjet chip 223 is disposed on the bottom of the case body 221. The case body 221 has an inner accommodation space for containing the print liquids. The case body 221 has a wall 221a, and the wall 221 of the case body 221 is disposed and corresponding to the carrying seat 21 (as shown in FIG. 2) while the ink cartridge 22 is installed on the rapid prototyping apparatus (not shown). The flexible circuit board 222 is disposed on the wall 221a and has a plurality of electrical contact points 222a. When the ink cartridge 22 is installed on the carrying seat 21 of the rapid prototyping apparatus, the ink cartridge 22 is electrically connected to the corresponding conductive parts (not shown) of the carrying seat 21 by the electrical contact points 222a of the flexible circuit board 222. Moreover, the ink cartridge 22 include an identification chip 229 configured to recognize, control and/or monitor a communication of signals transmitted between the rapid prototyping apparatus and the inkjet chip 223 of the ink cartridge 22.

As shown in FIG. 3B, the inkjet chip 223 is correspondingly disposed on the bottom of the case body 221 of the ink cartridge 22 and has a plurality of liquid supply slots 224. Preferably but not exclusively, the number of the liquid supply slots 224 is 4. Alternatively, in some embodiments, there are three liquid supply slots 224. The number of the liquid supply slots 224 is not limited to the above embodiments, and can be adjustable according the practical requirement. In the embodiment, as shown in FIG. 3C, the case body 221 of the ink cartridge 22 has three ink chambers 225, 226, 227 therein. Namely, the inner accommodation space of the case body 221 is divided into three ink chambers 225, 226, 227 for receiving different print liquids with different colors or same colors, respectively. For example, the ink chamber 225, the ink chamber 226 and the ink chamber 227 are configured to contain but not limited to a transparent binder (T), a cyan (C) ink and a magenta (M) ink, respectively. Three ink chambers 225, 226, 227 are connected to and in fluid communication with the plural liquid supply slots 224 of the inkjet chip 223 disposed on the bottom of the case body 221. In the embodiment, the ink chamber 225 is connected to and in fluid communication with the central two liquid supply slots 224b, 224c for introducing the transparent binder into the central two liquid supply slots 224b, 224c. The ink chamber 226 is connected to and in fluid communication with a lateral liquid supply slot 224a for introducing the cyan ink into the liquid supply slot 224a. The ink chamber 227 is connected to and in fluid communication with another lateral liquid supply slot 224d for introducing the magenta ink into the liquid supply slot 224d.

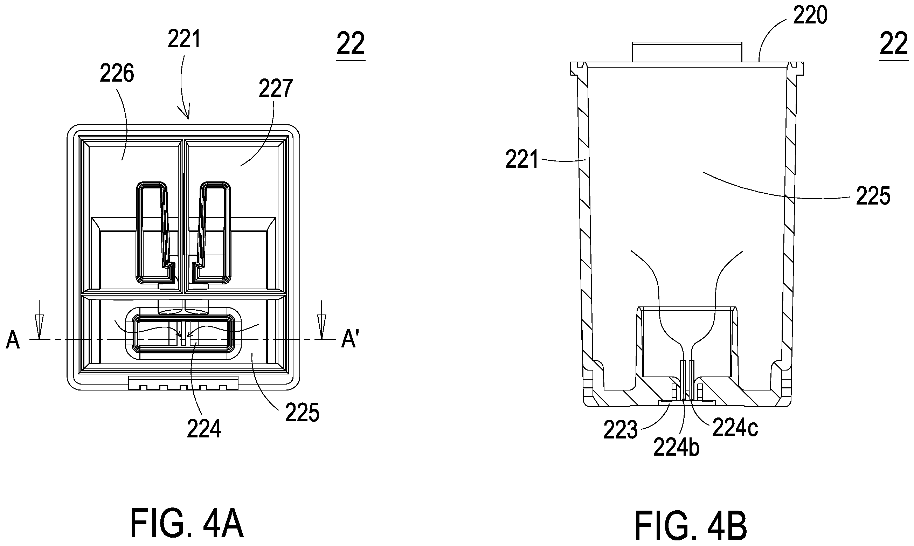

FIG. 4A is a schematic top and cross-sectional view illustrating the ink cartridge of the printing module of the rapid prototyping apparatus according to the first embodiment of the present invention. FIG. 4B is a cross-sectional view illustrating the ink cartridge of FIG. 4A and taken along line A-A'. As shown in FIGS. 4A and 4B, the case body 221 of the ink cartridge 22 has three ink chambers 225, 226, 227 connected to and in fluid communication with the plural liquid supply slots 224 of the inkjet chip 223 disposed on the bottom of the case body 221, respectively. According to the cross-sectional view of the ink chamber 225 of FIG. 4B and the cross-sectional view of FIG. 4A, the transparent binder contained in the ink chamber 225 flows from two sides to the bottom of the ink chamber 225, and is introduced to the inkjet chip 223 disposed on the bottom of the case body 221, so as to be introduced to the central two liquid supply slots 224b, 224c and outputted for performing a transparent-binder-supplying operation.

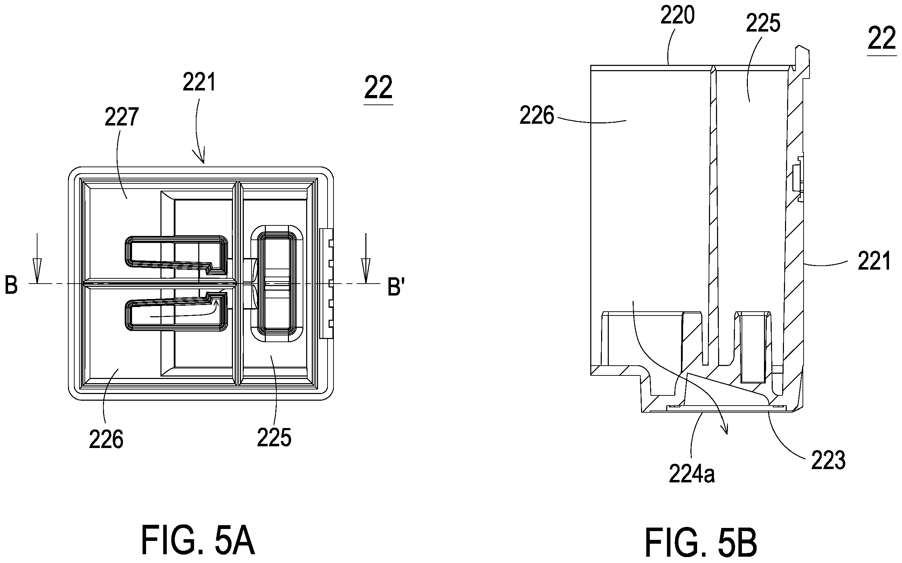

FIG. 5A is another schematic top and cross-sectional view illustrating the ink cartridge of the printing module of the rapid prototyping apparatus according to the first embodiment of the present invention. FIG. 5B is a cross-sectional view illustrating the ink cartridge of FIG. 5A and taken along line B-B'. According to the cross-sectional view of the ink chambers 225, 226 of FIG. 5B and the sectional view of FIG. 5A, the cyan ink contained in the ink chamber 226 flows to the bottom of the ink chamber 226, and is introduced to the inkjet chip 223 disposed on the bottom of the case body 221, so as to be introduced to the corresponding liquid supply slot 224a and outputted for performing a cyan-inkjet-supplying operation. In the embodiment, the ink chamber 227 is similar to the ink chamber 226, and the ink chamber 226 and the ink chamber 227 are symmetrically disposed within the case body 221. The inner structure and the print liquid flow of the ink chamber 227 are similar to those of the ink chamber 226, and are not redundantly described herein. According to FIGS. 3C, 4A, 4B, 5A and 5B, the ink cartridge 22 has three ink chambers 225, 226, 227 and an inkjet chip 223 having four liquid supply slots 224 cooperating with the three ink chambers 225, 226, 227, so as to introduce two color inks and the transparent binder for producing a three-dimensional physical model by the rapid prototyping printing process.

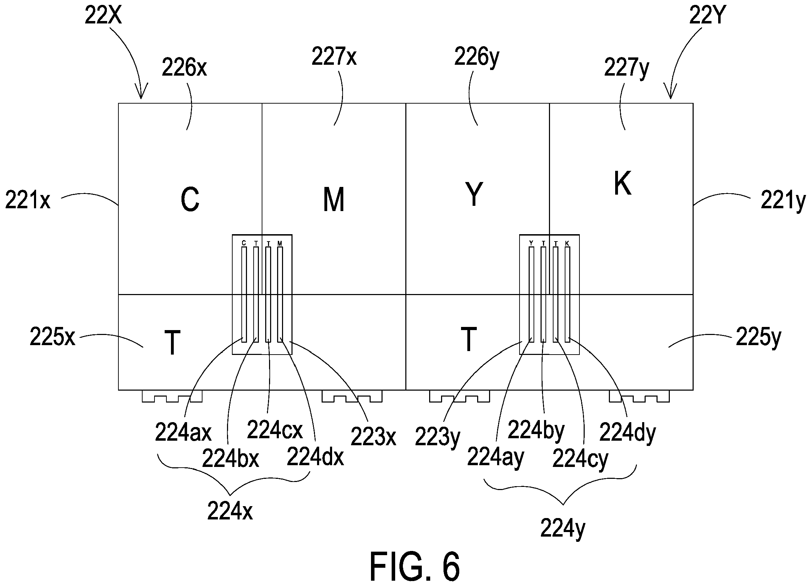

FIG. 6 is a schematic view illustrating the ink cartridges of the printing module of the rapid prototyping apparatus according to the first embodiment of the present invention.

As shown in FIGS. 2 and 6, the at least one ink cartridge 22 includes but not limited to two ink cartridges 22X, 22Y Each ink cartridge 22X, 22Y has three ink chambers 225x, 226x, 227x and 225y, 226y, 227y, respectively. In the embodiment, the ink chamber 225x, the ink chamber 226x and the ink chamber 227x of the ink cartridge 22X are configured to contain but not limited to the transparent binder (T), a cyan (C) ink and a magenta (M) ink, respectively. Moreover, the ink chamber 225y, the ink chamber 226y and the ink chamber 227y of the ink cartridge 22Y are configured to contain but not limited to the transparent binder (T), a yellow (Y) ink and a black (K) ink, respectively. The plural liquid supply slots 224x, 224y of the inkjet chips 223x, 223y disposed on the bottom of the case bodies 221x, 221y of the ink cartridges 22X, 22Y are connected to and in fluid communication with the corresponding ink chambers 225x, 226x, 227x, 225y, 226y, 227y, respectively. For example in the embodiment, the inkjet chip 223x of the ink cartridge 22X has the liquid supply slot 224ax configured to be in fluid communication with the ink chamber 226x for introducing the cyan ink contained therein, the central two liquid supply slots 224bx, 224cx configured to be in fluid communication with the ink chamber 225x for introducing the transparent binder contained therein, and the liquid supply slot 224dx configured to be in fluid communication with the ink chamber 227x for introducing the magenta ink contained therein. Moreover, the inkjet chip 223y of the ink cartridge 22Y has the liquid supply slot 224ay configured to be in fluid communication with the ink chamber 226y for introducing the yellow ink contained therein, the central two liquid supply slots 224by, 224cy configured to be in fluid communication with the ink chamber 225y for introducing the transparent binder contained therein, and the liquid supply slot 224dy configured to be in fluid communication with the ink chamber 227y for introducing the black ink contained therein. Consequently, the ink cartridges 22X, 22Y have different color inks, the black ink and the transparent binder contained therein, so as to perform the polychromatic printing operation for producing a three-dimensional physical model by the rapid prototyping printing process.

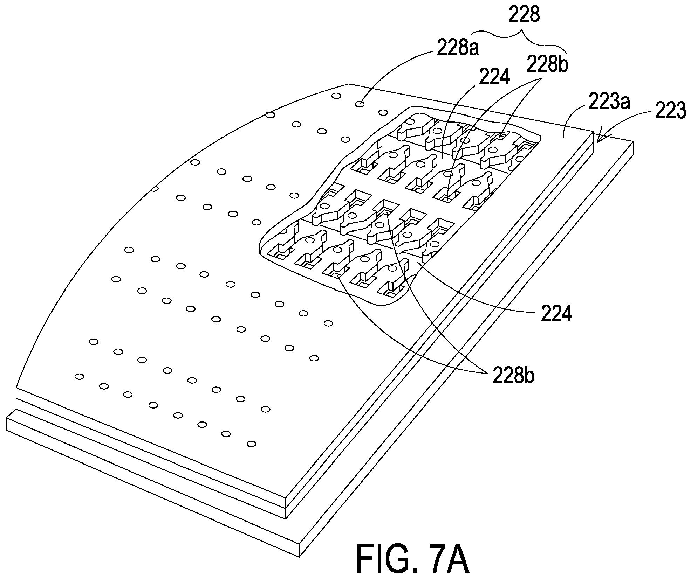

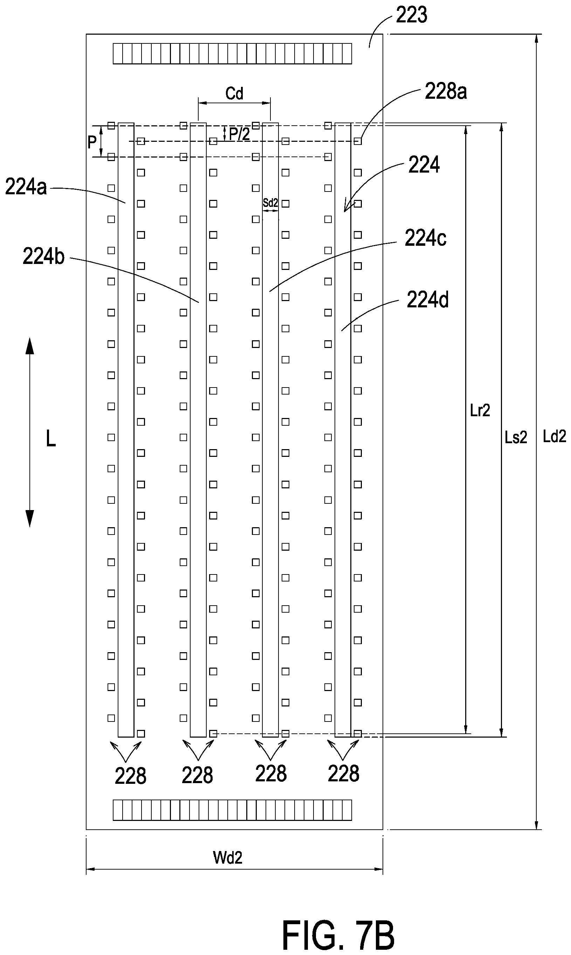

FIG. 7A is a schematic perspective view illustrating an inkjet chip of the ink cartridge of the printing module of the rapid prototyping apparatus according to the first embodiment of the present invention, wherein portion of the nozzle plate is removed. FIG. 7B is a schematic top view illustrating an inkjet chip of the ink cartridge according to the first embodiment of the present invention, wherein the nozzle plate is removed. As shown in FIGS. 7A and 7B, the inkjet chip 223 includes a plurality of liquid supply slots 224 disposed thereon. In the embodiment, the number of the liquid supply slots 224 is 4 (i.e. the liquid supply slots 224a, 224b, 224c, 224d). Each liquid supply slot 224 includes but not limited to two rows of liquid ejectors 228 located at the bilateral sides of the liquid supply slot 224 along the lateral long axis of the liquid supply slot 224, respectively. The liquid ejectors 228 of each row are in staggered arrangement with respect to the liquid ejectors 228 of other row. Consequently, the inkjet chip 223 of the embodiment includes plural liquid ejectors 228 arranged in 8 rows (i.e. 2 (rows/each liquid supply slot) ×4 (liquid supply slots) = 8 rows). Each liquid ejector 228 includes a heating resistor 228b and a corresponding nozzle 228a. The heating resistor 228b of the liquid ejector 228 is disposed on the inkjet chip 223 and within a cavity, which is in fluid communication with the liquid supply slot 224 and the ink chambers 225, 226, 227. Moreover, the heating resistor 228b disposed within the cavity is sealed by a nozzle plate 223a. The nozzles 228a are formed in the nozzle plate 223a and corresponding to the respective heating resistors 228b. When the print liquid is heated by the corresponding heating resistor 228b, the print liquid is vaporized and the drop of the print liquid is ejected through the corresponding nozzle 228a. Consequently, the printing action of the corresponding liquid ejector 228 is implemented.

In the embodiment, as shown in FIG. 7B, the inkjet chip 223 includes four liquid supply slots 224 parallel to a referring axis L. The liquid supply slots 224 are separated apart along the vertical direction of the referring axis L. The heating resistors 228b are arranged along the referring axis in two rows and disposed at the bilateral sides of the corresponding liquid supply slot 224 in staggered arrangement. Consequently, each inkjet chip 223 of the embodiment includes plural heating resistors 228b arranged in 8 rows. The number of the heating resistors 228b of each row is 300 or more than 300, and the total number of the heating resistors 228b is up to 2400, but it is not limited thereto. Any two adjacent heating resistors 228b in the same row have a distance P. Any two adjacent heating resistors 228b in the different rows have a vertical distance P/2. In some embodiments, the distance P is ranged from 0,042 mm (1/600 inch) to 0,0021 mm (1/1200 inch) inch, and the vertical distance P/2 is ranged from 0,0021 mm (1/1200 inch) to 0.00105 mm (1/2400 inch) inch. In the embodiment, preferably but not exclusively, the distance P is 0,042 mm (1/600 inch) and the vertical distance P/2 is 0,0021 mm (1/1200 inch). Please refer to FIG. 7B, in the embodiment, the inkjet chip 223 is rectangular structure. The width Wd2 of the inkjet chip 223 is ranged from 5 mm to 7 mm, and perfectly implemented at 6 mm. The length Ld2 of the inkjet chip 223 is about 15.4 mm. The total area of the inkjet chip 223 is ranged from 77 mm$^2$ to 107.8 mm$^2$. The aspect ratio (Ld2/Wd2) is ranged from 15.4/5(i.e. 3.08) to 15.4/7(i.e. 2.2), and perfectly implemented at 15.4/6(i.e. 2.56). Consequently, the total length Lr2 of the heating resistors 228b arranged in a row is about 1/2 inch. The total number of the liquid ejectors 228 of each inkjet chip 223 is up to 2400. The distributing density of the liquid ejectors 228 disposed on the inkjet chip 223 of the present invention is ranged from 22.2 (i.e. 2400/(15.4×7)=22.2) to 31.16 (i.e. 2400/(15.4×5)=31.16) pieces per mm$^2$, and perfectly implemented at 25.9 (i.e. 2400/(15.4×6)=25.9) pieces per mm$^2$.

In addition, the width Sd2 of the liquid supply slot 224 is ranged from 0.15 mm to 0.3 mm. The length Ls2 of the liquid supply slot 224 is 12.8 mm. Two adjacent liquid supply slots 224 have a distance Cd about 1.27 mm. The total area of the inkjet chip 223 excluding the located area of four liquid supply slots is equal to a wiring area of the inkjet chip 223 for disposing inner circuits.

In accordance with an aspect of the present invention, the ratio of the wiring area to the total area of the inkjet chip 223 is accounted by the following equation:

$$\text{((Total area of the inkjet chip 223) - (Located area of the liquid supply slots 224 without wiring)) / (Total area of the inkjet chip 223).}$$

In the embodiment, the inkjet chip 223 includes 4 liquid supply slots 224 disposed thereon. The ratio is equal to ((Length Ld2 of the inkjet chip 223 × Width Wd2 of the inkjet chip 223) - (Length Ls2 of the liquid supply slot 224 × Width Sd2 of the liquid supply slot 224 × 4 liquid supply slots 224)) / (Length Ld2 of the inkjet chip 223 × Width Wd2 of the inkjet chip 223).

In some embodiments, the width Wd2 of the inkjet chip 223 is about 5 mm, and the length Ld2 of the inkjet chip 223 is about 15.4 mm. The total area of the inkjet chip 223 is about 77 mm$^2$. Moreover, the length Lds of the liquid supply slot 224 is about 12.8 mm, and the width Ls2 of the liquid supply slot 224 is about 0.15 mm. Consequently, the wiring area of the inkjet chip 223 is about 69.32 mm$^2$ (i.e. 77-12.8×0.15×4=69.32) The ratio of the wiring area of the inkjet chip 223 to the total area of the inkjet chip 223 is 90.02% (i.e. 69.32 mm$^2$ / 77 mm$^2$ = 90.02%).

In some embodiments, the width Wd2 of the inkjet chip 223 is about 5 mm, and the length Ld2 of the inkjet chip 223 is about 15.4 mm. The total area of the inkjet chip 223 is about 77 mm$^2$. Moreover, the length Lds of the liquid supply slot 224 is about 12.8mm, and the width Ls2 of the liquid supply slot 224 is about 0.3 mm. Consequently, the wiring area of the inkjet chip 223 is about 61.64 mm$^2$ (i.e. 77-12.8×0.3×4=61.61). The ratio of the wiring area of the inkjet chip 223 to the total area of the inkjet chip 223 is 80.05% (i.e. 61.64 mm$^2$ / 77 mm$^2$ = 80.05%), which is the minimum ratio.

In some embodiments, the width Wd2 of the inkjet chip 223 is about 7 mm, and the length Ld2 of the inkjet chip 223 is about 15.4 mm. The total area of the inkjet chip 223 is about 107.8 mm$^2$. Moreover, the length Lds of the liquid supply slot 224 is about 12.8 mm, and the width Ls2 of the liquid supply slot 224 is about 0.15 mm. Consequently, the wiring area of the inkjet chip 223 is about 100.12 mm$^2$ (i.e. 107.8-12.8×0.15×4=100.12). The ratio of the wiring area of the inkjet chip 223 to the total area of the inkjet chip 223 is 92.87% (i.e. 100.12 mm$^2$ / 107.8 mm$^2$ = 92.87%), which is the maximum ratio.

In some embodiments, the width Wd2 of the inkjet chip 223 is about 7 mm, and the length Ld2 of the inkjet chip 223 is about 15.4 mm. The total area of the inkjet chip 223 is about 107.8 mm$^2$. Moreover, the length Lds of the liquid supply slot 224 is about 12.8 mm, and the width Ls2 of the liquid supply slot 224 is about 0.3 mm. Consequently, the wiring area of the inkjet chip 223 is about 92.44 mm$^2$ (i.e. 107.8-12.8×0.3×4=92.44). The ratio of the wiring area of the inkjet chip 223 to the total area of the inkjet chip 223 is 85.75% (i.e. 92.44 mm$^2$ / 107.8 mm$^2$ = 85.75%).

According to the above descriptions, the ratio of the wiring area to the total area of the inkjet chip 223 having 4 liquid supply slots of the present invention is ranged from 80.05% to 92.87%.

When the unwiring area of the inkjet chip 223 (i.e. the located area of the liquid supply slots 224) is fixed, the total area of the inkjet chip 223 can be decreased by means of reducing the circuit layout area and contacting points of the inkjet chip 223 (i.e. the distribution area of the inkjet chip 223). Consequently, the entire size of the inkjet chip 223 is minimized and the cost for producing the structure of the inkjet chip 223 is reduced.

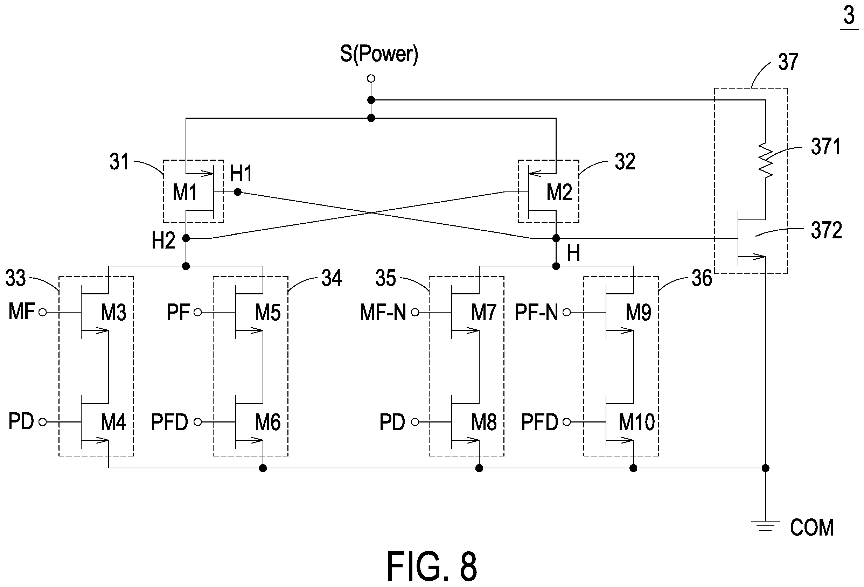

FIG. 8 is a schematic view illustrating a control circuit of the inkjet chip of the ink cartridge of the printing module of the rapid prototyping apparatus according to the first embodiment of the present invention. As mentioned in the above description, the inkjet chip 223 has a plurality of nozzles 228a. Each nozzle 228a is corresponding to a liquid ejector 37. Each liquid ejector 37 has a control circuit configured to control the liquid ejector 37 and determine if the liquid ejector 37 has to perform an ejecting operation. Because each nozzle 228a is implemented to eject the drop, and the inkjet chip 223 has a plurality of control circuits corresponding to respective liquid ejectors 37. The control circuit is exampled but not limited to the following descriptions.

As shown in FIG. 8, the control circuit of the present invention is implemented in the inkjet chip 223 of the ink cartridge 22 to receive a power signal, a printing data signal PD, a preheating data signal PFD, a preheating control signal PF, a reverse preheating control signal PF-N, a heating control signal MF, and a reverse heating control signal MF-N, and the control circuit is connected with the common connection node COM. Consequently, a part of print liquids and the inkjet chip are preheated or a part of print liquids is heated for generating a bubble and ejecting the print liquids through the nozzles 228a of the inkjet chip 223. The preheating data signal PF is an inversed signal of the reverse preheating control signal PF-N. The heating control signal MF is an inverted signal of the reverse heating control signal MF-N. In some embodiments, two inverter (not shown) can be employed to invert the preheating control signal PF and the heating control signal MF into the reverse preheating control signal PF-N and the reverse heating control signal MF-N, respectively.

The control circuit 3 of the present invention includes a first switch circuit 31, a second switch circuit 32, a third switch circuit 33, a fourth switch circuit 34, a fifth switch circuit 35, a sixth switch circuit 36 and a liquid ejector 37. The liquid ejector 37 includes a heating resistor 371 and a driving transistor 372. The heating resistor 371 has an input terminal to receive the power signal and an output terminal connected to an input terminal of the driving transistor 372. The driving transistor 372 has an output terminal connected to the common connection node COM, and a control terminal connected to a heating control node H. Consequently, the liquid ejector 37 is controlled according to the heating control node H for determining if the liquid ejector 37 has to perform a heating or preheating operation. When the heating control node H receives high voltage signal, the driving transistor 372 is turned on and the heating resistor 371 will receive the power signal from the power terminal S, so as to perform the heating or preheating operation.

The second control circuit 32 is connected between the power terminal S and the heating control node H, and has a second switch element M2, which includes but not limited to MOS transistor or BJT transistor. The second control circuit 32 can be constituted by a plurality of switch elements connected in parallel. The second switch circuit 32 has a control terminal connected to a second control node H2. Consequently, the second switch circuit 32 is controlled according to the second control node H2 for determining if the second switch circuit 32 is turned on. When the second switch circuit 32 receives low voltage signal from the second control node H2, the second switch circuit 32 is turned on and the power signal is transmitted from the power terminal S to the heating control node H (i.e. the output terminal). The second switch element M2 has a gate terminal, a drain terminal and a source terminal. The source terminal (i.e. the input terminal) is connected to the power terminal S for receiving the power signal, the drain terminal (i.e. the output terminal) is connected to the heating control node H, and the gate terminal is connected to the second control node H2.

The first switch circuit 31 is connected between the power terminal S and the second control node H2 of the second control switch circuit 32, and has a first switch element M1, which includes but not limited to MOS transistor or BJT transistor. The first control circuit 31 can be constituted by a plurality of switch elements connected in parallel. The first switch circuit 31 has a control terminal connected to a first control node H1 and connected to the heating control node H. Consequently, the first switch circuit 31 is controlled according to the first control node H1 for determining if the first switch circuit 31 is turned on. When the first switch circuit 31 receives low voltage signal from the first control node H1, the first switch circuit 31 is turned on and the power signal is transmitted from the power terminal S to the second control node H2 (i.e. the output terminal). The first switch element M1 has a gate terminal, a drain terminal and a source terminal. The source terminal (i.e. the input terminal) of the first switch element M1 is connected to the power terminal S for receiving the power signal, the drain terminal (i.e. the output terminal) of the first switch element M1 is connected to the gate terminal (i.e. the control terminal) of the second switch element M2, and the gate terminal of the first switch element M1 is connected to the heating control node H.

The third switch circuit 33 is connected between the second control node H2 and the common connection node COM. The third switch circuit 33 has a third switch element M3 and a fourth switch element M4 in series. The control terminals of the third switch element M3 and the fourth switch element M4 are connected to receive the heating control signal MF and the print data signal PD, respectively. Consequently, the third switch circuit 33 is controlled according to the print data signal PD and the heating control signal MF for determining if the third switch circuit 33 is turned on. When the print data signal PD and the heating control signal MF are at high voltage levels, the third switch circuit 33 is turned on. The third switch element M3 and the fourth switch element M4 both have a gate terminal, a drain terminal and a source terminal. The gate terminal (i.e. the control terminal) of the third switch element M3 is connected to receive the heating control signal MF. Consequently, whether the third switch element M3 is turned on is determined by the control of the heating control signal MF. The gate terminal (i.e. the control terminal) of the fourth switch element M4 is connected to receive the print data signal PD. Consequently, whether the fourth switch element M4 is turned on is determined by the control of the print data signal PD. The drain terminal (i.e. the input terminal) of the third switch element M3 is connected to the drain terminal (i.e. the output terminal) of the first switch element M1. The source terminal (i.e. the output terminal) of the third switch element M3 is connected to the drain terminal (i.e. the input terminal) of the fourth switch element M4. The source terminal (i.e. the output terminal) of the fourth switch element M4 is connected to the common connection node COM.

The fourth switch circuit 34 is connected between the second control node H2 and the common connection node COM. The fourth switch circuit 34 has a fifth switch element M5 and a sixth switch element M6 in series. The control terminals of the fifth switch element M5 and the sixth switch element M6 are connected to receive the preheating control signal PF and the preheating data signal PFD, respectively. Consequently, the fourth switch circuit 34 is controlled according to the preheating control signal PF and the preheating data signal PFD for determining if the fourth switch circuit 34 is turned on. When the preheating control signal PF and the preheating data signal PFD are at high voltage levels, the fourth switch circuit 34 is turned on. The fifth switch element M5 and the sixth switch element M6 both have a gate terminal, a drain terminal and a source terminal. The gate terminal (i.e. the control terminal) of the fifth switch element M5 is connected to receive the preheating control signal PF. Consequently, whether the fifth switch element M5 is turned on is determined by the control of the preheating control signal PF. The gate terminal (i.e. the control terminal) of the sixth switch element M6 is connected to receive the preheating data signal PFD. Consequently, whether the sixth switch element M6 is turned on is determined by the control of the preheating data signal PFD. The drain terminal (i.e. the input terminal) of the fifth switch element M5 is connected to the drain terminal (i.e. the output terminal) of the first switch element M1. The source terminal (i.e. the output terminal) of the fifth switch element M5 is connected to the drain terminal (i.e. the input terminal) of the sixth switch element M6. The source terminal (i.e. the output terminal) of the sixth switch element M6 is connected to the common connection node COM.

The fifth switch circuit 35 is connected between the heating control node H and the common connection node COM. The fifth switch circuit 35 has a seventh switch element M7 and an eighth switch element M8 in series. The control terminals of the seventh switch element M7 and the eighth switch element M8 are connected to receive the reverse heating control signal MF-N and the print data signal PD, respectively. Consequently, the fifth switch circuit 35 is controlled according to the reverse heating control signal MF-N and the print data signal PD for determining if the fifth switch circuit 35 is turned on. When the reverse heating control signal MF-N and the print data signal PD are at high voltage levels, the fifth switch circuit 35 is turned on. The seventh switch element M7 and the eighth switch element M8 both have a gate terminal, a drain terminal and a source terminal. The gate terminal (i.e. the control terminal) of the seventh switch element M7 is connected to receive the reverse heating control signal MF-N. Consequently, whether the seventh switch element M7 is turned on is determined by the control of the reverse heating control signal MF-N. The gate terminal (i.e. the control terminal) of the eighth switch element M8 is connected to receive the print data signal PD. Consequently, whether the eighth switch element M8 is turned on is determined by the control of the print data signal PD. The drain terminal (i.e. the input terminal) of the seventh switch element M7 is connected to the drain terminal (i.e. the output terminal) of the second switch element M2. The source terminal (i.e. the output terminal) of the seventh switch element M7 is connected to the drain terminal (i.e. the input terminal) of the eighth switch element M8. The source terminal (i.e. the output terminal) of the eighth switch element M8 is connected to the common connection node COM.

The sixth switch circuit 36 is also connected between the heating control node H and the common connection node COM. The sixth switch circuit 36 has a ninth switch element M9 and a tenth switch element M10 in series. The control terminals of the ninth switch element M9 and the tenth switch element M10 are connected to receive the reverse preheating control signal PF-N and the preheating data signal PFD, respectively. Consequently, the sixth switch circuit 36 is controlled according to the reverse preheating control signal PF-N and the preheating data signal PFD for determining if the sixth switch circuit 36 is turned on. When the reverse preheating control signal PF-N and the preheating data signal PFD are at high voltage levels, the sixth switch circuit 36 is turned on. The ninth switch element M9 and the tenth switch element M10 both have a gate terminal, a drain terminal and a source terminal. The gate terminal (i.e. the control terminal) of the ninth switch element M9 is connected to receive the reverse preheating control signal PF-N. Consequently, whether the ninth switch element M9 is turned on is determined by the control of the reverse preheating control signal PF-N. The gate terminal (i.e. the control terminal) of the tenth switch element M10 is connected to receive the preheating data signal PFD. Consequently, whether the tenth switch element M10 is turned on is determined by the control of the preheating data signal PFD. The drain terminal (i.e. the input terminal) of the ninth switch element M9 is connected to the drain terminal (i.e. the output terminal) of the second switch element M2. The source terminal (i.e. the output terminal) of the ninth switch element M9 is connected to the drain terminal (i.e. the input terminal) of the tenth switch element M10. The source terminal (i.e. the output terminal) of the tenth switch element M10 is connected to the common connection node COM.

According to the above descriptions, when the preheating control signal PF and the preheating data signal PFD are at high voltage levels and the reverse preheating control signal PF-N is at low voltage level, the sixth switch circuit 36 is turned off, the second switch circuit 32 is controlled by the control signal transmitted from the output terminal of the first switch circuit 31 and the fourth switch circuit 34 is turned on, so that the power signal is transmitted to the heating resistor 371 from the second switch circuit 32 and the heating resistor 371 preheats a part of the print liquid (i.e. print ink) and the inkjet chip 223.

When the print data signal PD and the heating control signal MF are at high voltage levels, and the reverse heating control signal MF-N is at low voltage level, the fifth switch circuit 35 is turned off, and the second switch circuit 32 is controlled by the control signal transmitted from the output terminal of the first switch circuit 31 and the third switch circuit 33 is turned on, so that the power signal is transmitted to the heating resistor 371 from the second switch circuit 32 and the heating resistor 371 heats a part of the print ink to generate a bubble and eject the print ink through the nozzle 228a of the inkjet chip 223.

Alternatively, the above switch elements ranged from the third switch element M3 to the tenth switch element M10 can include but not limited to MOS transistor or BJT transistor. Any electronic component capable of achieving the same purpose and effect is included in the disclosed scope of the present invention.

When a printing operation is performed by the printing module 2 of the rapid prototyping apparatus (not shown), the liquid ejector 37 is controlled by means of transmitting the power signal, the printing data signal PD, the heating control signal MF and the preheating control signal PF to the control circuit 3 of the inkjet chip 233 of the ink cartridge 22, so as to perform a heating or preheating operation. Even though the printing operation is not performed, the preheating operation can be performed to warm up and keep the temperature of the inkjet chip 233 for assuring the print quality. Moreover, the efficiency of controlling the preheating temperature is improved and the printing speed is enhanced.

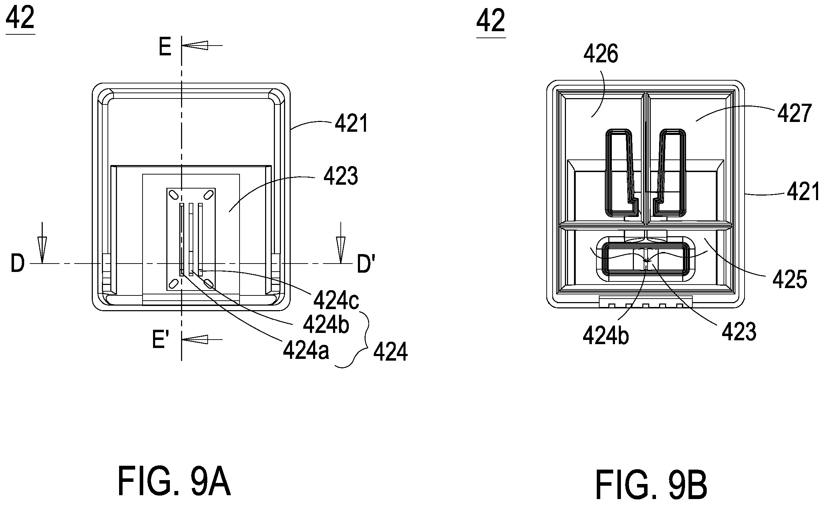

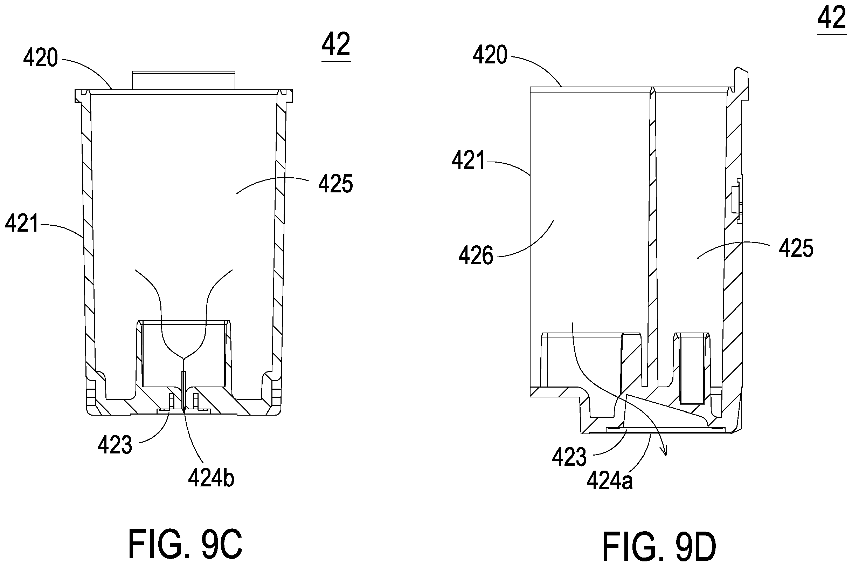

Please refer to FIGS. 9A, 9B, 9C and 9D. FIG. 9A is a schematic bottom view illustrating the ink cartridge according to a second embodiment of the present invention. FIG 9B is a schematic top and cross-sectional view illustrating the ink cartridge of FIG. 9A. FIG. 9C is a cross-sectional view illustrating the ink cartridge of FIG. 9A and taken along line D-D'. FIG. 9D is a cross-sectional view illustrating the ink cartridge of FIG. 9A and taken along line E-E'. As shown in FIGS. 9A and 9B, the structure of the ink cartridge 42 is similar to the above embodiment. The case body 421 of the ink cartridge 42 has three ink chambers 425, 426, 427 and the ink cartridge 42 includes an inkjet chip 423 disposed on the bottom of the case body 421. In the embodiment, the number of the liquid supply slots 424 included in the inkjet chip 423 is different from that of the above embodiment. In the embodiment, preferably but not exclusively, the number of the liquid supply slots 424 is 3.

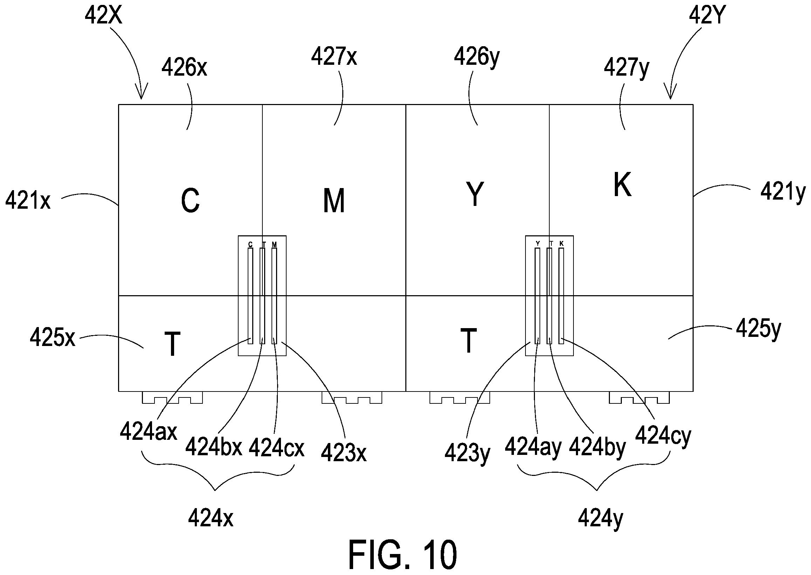

FIG. 10 is a schematic view illustrating the ink cartridges of the printing module of the rapid prototyping apparatus according to the second embodiment of the present invention. As shown in FIGS. 9B and 10, in the embodiment, the ink chamber 425, the ink chamber 426 and the ink chamber 427 of the case body 421 of the ink cartridge 42 are configured to contain but not limited to a transparent binder (T), a cyan (C) ink, and a magenta (M) ink, respectively. Three ink chambers 425, 426, 427 are connected to and in fluid communication with the plural liquid supply slots 424 of the inkjet chip 423 disposed on the bottom of the case body 421. As shown in FIGS. 9B and 9C, the transparent binder contained in the ink chamber 425 flows from two sides to the bottom of the ink chamber 425, and is introduced to the inkjet chip 423 disposed on the bottom of the case body 421, so as to be introduced to the central liquid supply slot 424b and outputted for performing a transparent-binder-supplying operation.

As shown in FIG. 9D, the cyan ink contained in the ink chamber 426 flows to the bottom of the ink chamber 426, and is introduced to the inkjet chip 423 disposed on the bottom of the case body 421, so as to be introduced to the corresponding liquid supply slot 424a and outputted for performing a cyan-inkjet-supplying operation. In the embodiment, the inner structure of the ink chamber 427 is similar to that of the ink chamber 426, and the ink chamber 427 and the ink chamber 426 are symmetrically disposed within the case body 421. The ink flow of the ink chamber 427 is similar to that of the ink chamber 426, and is not redundantly described herein.

FIG 10 is a schematic view illustrating the ink cartridges of the printing module of the rapid prototyping apparatus according to the second embodiment of the present invention. As shown in FIG. 10, the at least two ink cartridges 42 include but not limited to two ink cartridges 42X, 42Y. Each ink cartridge 42X, 42Y has three ink chambers 425x, 426x, 427x and 425y, 426y, 427y, respectively. In the embodiment, the ink chamber 425x, the ink chamber 426x and the ink chamber 427x of the ink cartridge 42X are configured to contain but not limited to the transparent binder (T), a cyan (C) ink and a magenta (M) ink, respectively. Moreover, the ink chamber 425y, the ink chamber 426y and the ink chamber 427y of the ink cartridge 42Y are configured to contain but not limited to the transparent binder (T), a yellow (Y) ink and a black (K) ink, respectively. The plural liquid supply slots 424x, 424y of the inkjet chips 423x, 423y disposed on the bottom of the case bodies 421x, 421y of the ink cartridges 42X, 42Y are connected to and in fluid communication with the corresponding ink chambers 425x, 426x, 427x, 425y, 426y, 427y, respectively. For example in the embodiment, the inkjet chip 423x of the ink cartridge 42X has the liquid supply slot 424ax configured to be in fluid communication with the ink chamber 426x for introducing the cyan ink contained therein, the central supply slot 424bx configured to be in fluid communication with the ink chamber 425x for introducing the transparent binder contained therein, and the liquid supply slot 424cx configured to be in fluid communication with the ink chamber 427x for introducing the magenta ink contained therein. Moreover, the inkjet chip 423y of the ink cartridge 42Y has the liquid supply slot 424ay configured to be in fluid communication with the ink chamber 426y for introducing the yellow ink contained therein, the central liquid supply slot 424by configured to be in fluid communication with the ink chamber 425y for introducing the transparent binder contained therein, and the liquid supply slot 424cy configured to be in fluid communication with the ink chamber 427y for introducing the black ink contained therein. Consequently, the ink cartridges 42X, 42Y have different color inks, the black ink and the transparent binder contained therein, so as to perform the polychromatic printing operation for producing a three-dimensional physical model by the rapid prototyping printing process.

In the embodiment, the ratio of the wiring area to the total area of the inkjet chip 423 is accounted by the following equation:

$$((\text{Total area of the inkjet chip 423}) - (\text{Located area of the liquid supply slots 424 without wiring})) / (\text{Total area of the inkjet chip 423}).$$

In the embodiment, the inkjet chip 423 includes 3 liquid supply slots 424 disposed thereon. The structure and size of the inkjet chip 423 and the liquid supply slots 424 are similar to that of the inkjet chip 223 and the liquid slot 224 shown in FIG. 7B. The ratio is equal to ((Length Ld2 of the inkjet chip 423 $\times$ Width Wd2 of the inkjet chip 423) - (Length Ls2 of the liquid supply slot 424 $\times$ Width Sd2 of the liquid supply slots 424 $\times$ 3 liquid supply slots 424)) / (Length Ld2 of the inkjet chip 423 $\times$ Width Wd2 of the inkjet chip 423).

In some embodiments, the width Wd2 of the inkjet chip 423 is about 5 mm, and the length Ld2 of the inkjet chip 423 is about 15.4 mm. The total area of the inkjet chip 423 is about 77 mm$^2$. Moreover, the length Lds of the liquid supply slot 424 is about 12.8 mm, and the width Ls2 of the liquid supply slot 424 is about 0.15 mm. Consequently, the wiring area of the inkjet chip 223 is about 71.24 mm$^2$ (i.e. 77-12.8$\times$0.15$\times$3=71.24). The ratio of the wiring area of the inkjet chip 423 to the total area of the inkjet chip 423 is 92.51% (i.e. 71.24 mm$^2$ / 77 mm$^2$ = 92.51%).

In some embodiments, the width Wd2 of the inkjet chip 423 is about 5 mm, and the length Ld2 of the inkjet chip 423 is about 15.4 mm. The total area of the inkjet chip 423 is about 77 mm$^2$. Moreover, the length Lds of the liquid supply slot 424 is about 12.8 mm, and the width Ls2 of the liquid supply slot 424 is about 0.3 mm. Consequently, the wiring area of the inkjet chip 423 is about 65.48 mm$^2$ (i.e. 77-12.8$\times$0.3$\times$3=65.48) The ratio of the wiring area of the inkjet chip 423 to the total area of the inkjet chip 423 is 85.03% (i.e. 65.48 mm$^2$ / 77 mm$^2$ = 85.03%), which is the minimum ratio.

In some embodiments, the width Wd2 of the inkjet chip 423 is about 7 mm, and the length Ld2 of the inkjet chip 423 is about 15.4 mm. The total area of the inkjet chip 423 is about 107.8 mm$^2$. Moreover, the length Lds of the liquid supply slot 424 is about 12.8 mm, and the width Ls2 of the liquid supply slot 424 is about 0.15 mm. Consequently, the wiring area of the inkjet chip 423 is about 102.04 mm$^2$ (i.e. 107.8-12.8$\times$0.15$\times$3=102.04). The ratio of the wiring area of the inkjet chip 423 to the total area of the inkjet chip 423 is 94.65% (i.e. 102.04 mm$^2$ / 107.8 mm$^2$ = 94.65%), which is the maximum ratio.

In some embodiments, the width Wd2 of the inkjet chip 423 is about 7 mm, and the length Ld2 of the inkjet chip 423 is about 15.4 mm. The total area of the inkjet chip 223 is about 107.8 mm$^2$. Moreover, the length Lds of the liquid supply slot 424 is about 12.8 mm, and the width Ls2 of the liquid supply slot 424 is about 0.3 mm. Consequently, the wiring area of the inkjet chip 423 is about 96.28 mm$^2$ (i.e. 107.8-12.8$\times$0.3$\times$3=96.28). The ratio of the wiring area of the inkjet chip 423 to the total area of the inkjet chip 423 is 89.31% (i.e. 96.28 mm$^2$ / 107.8 mm$^2$ = 89.31%).

According to the above descriptions, the ratio of the wiring area to the total area of the inkjet chip 423 having 3 liquid supply slots of the present invention is ranged from 85.03% to 94.65%.

Alternatively, the print liquids contained in the plural ink cartridges 22, 42 may be in fluid communication with the continuous liquid supply device (not shown) of the rapid prototyping apparatus through an external pipe (not shown), so that a continuous liquid supply system is defined.

In summary, the present invention provides a printing module of a rapid prototyping apparatus. The printing module includes the modular ink cartridge having three ink chambers. Two of the ink chambers are configured to receive different color inks, respectively, and one of the ink chambers is configured to receive a liquid binder. Consequently, a rapid prototyping printing process is performed without adjusting the design of the original printing module, and the effects of fixing the size of the original printing module and reducing the printing cost are achieved.

## Claims

1. A printing module (1, 2) of a rapid prototyping apparatus comprising:

a printing platform (10, 20) having a frame (101, 201) and a driving shaft (102, 202), wherein the driving shaft (102, 202) is installed on the frame (101, 201);
a carrying seat (11, 22) penetrated by the driving shaft (102, 202) and disposed on the driving shaft (102, 202); and
at least two modular ink cartridges (22, 22X, 22Y, 42, 42X, 42Y) disposed on the carrying seat (11, 22); wherein each of the modular ink cartridges (22, 22X, 22Y, 42, 42X, 42Y) has a case body (221, 221x, 221y, 421);
**characterized in that** each of the modular ink cartridges has three ink chambers (225, 226, 227, 225x, 226x, 227x, 225y, 226y, 227y, 425, 426, 427, 425x, 426x, 427x, 425y, 426y, 427y), which are divided within the case body (221, 221x, 221y, 421) for receiving different print liquids, respectively, wherein
the case bodies (221, 221x, 221y, 421) of the at least two modular ink cartridges (22, 22X, 22Y, 42, 42X, 42Y) contain the same print liquid in at least one ink chamber for performing the rapid prototyping printing process, the print liquid contained in one of the three ink chambers (225, 226, 227, 225x, 226x, 227x, 225y, 226y, 227y, 425, 426, 427, 425x, 426x, 427x, 425y, 426y, 427y) of each of the at least two modular ink cartridges (22, 22X, 22Y, 42, 42X, 42Y) is a liquid binder, and
the print liquids contained in the other two of the three ink chambers (225, 226, 227, 225x, 226x, 227x, 225y, 226y, 227y, 425, 426, 427, 425x, 426x, 427x, 425y, 426y, 427y) of each of the at least two modular ink cartridges (22, 22X, 22Y, 42, 42X, 42Y) are color inks.

2. The printing module according to claim 1, wherein each of the modular ink cartridges (22, 22X, 22Y, 42, 42X, 42Y) further comprises an identification chip (229) configured to recognize and monitor a transmitting signal between the respective modular ink cartridge (22, 22X, 22Y, 42, 42X, 42Y) and the rapid prototyping apparatus.

3. The printing module according to any of the preceding claims, wherein the respective modular ink cartridge (22, 22X, 22Y, 42, 42X, 42Y) further comprises an inkjet chip (223, 223x, 223y, 423, 423x, 423y) disposed on a bottom of the case body (221, 221x, 221y, 421), the inkjet chip (223, 223x, 223y, 423, 423x, 423y) has a plurality of liquid supply slots (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy), and each liquid supply slot (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) is connected to and in fluid communication with the corresponding ink chamber (225, 226, 227, 225x, 226x, 227x, 225y, 226y, 227y, 425, 426, 427, 425x, 426x, 427x, 425y, 426y, 427y).

4. The printing module according to claim 3, wherein the inkjet chip (223, 223x, 223y, 423, 423x, 423y) has four liquid supply slots (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy), two of the liquid supply slots (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) are together connected to and in fluid communication with one of the three ink chambers (225, 226, 227, 225x, 226x, 227x, 225y, 226y, 227y, 425, 426, 427, 425x, 426x, 427x, 425y, 426y, 427y), and the other two of the liquid supply slots (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) are respectively connected to other two of the three ink chambers (225, 226, 227, 225x, 226x, 227x, 225y, 226y, 227y, 425, 426, 427, 425x, 426x, 427x, 425y, 426y, 427y).

5. The printing module according to claim 3, wherein the inkjet chip (223, 223x, 223y, 423, 423x, 423y) has three liquid supply slots (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) respectively connected to and in fluid communication with the corresponding ink chamber (225, 226, 227, 225x, 226x, 227x, 225y, 226y, 227y, 425, 426, 427, 425x, 426x, 427x, 425y, 426y, 427y).

**Patentansprüche**

1. Druckmodul (1, 2) einer Rapid-Prototyping-Vorrichtung, umfassend:

eine Bodengruppe (10, 20) mit einem Rahmen (101, 201) und einer Antriebswelle (102, 202), wobei die Antriebswelle (102, 202) auf dem Rahmen (101, 201) angebracht ist;
einen Tragsitz (11, 22), durch den sich die Antriebswelle (102, 202) hindurch erstreckt und der auf der Antriebswelle (102, 202) angeordnet ist; und
mindestens zwei auf dem Tragsitz (11, 22) angeordnete, modulare Farbpatronen (22, 22X, 22Y, 42, 42X, 42Y);

wobei jede der modularen Farbpatronen (22, 22X, 22Y, 42, 42X, 42Y) einen Gehäusekörper (221, 221x, 221y, 421) aufweist;

**dadurch gekennzeichnet, dass** jede der modularen Farbpatronen (22, 22X, 22Y, 42, 42X, 42Y) drei Farbkammern (225, 226, 227, 225x, 226x, 227y, 225y, 226y, 227y, 425, 426, 427, 425x, 426x, 427x, 425y , 426y, 427y) aufweist, die jeweils in dem Gehäusekörper (221, 221x, 221y, 421) unterteilt sind, um drei unterschiedliche Druckflüssigkeiten aufzunehmen, wobei

die Gehäusekörper (221, 221x, 221y, 421) der mindestens zwei modularen Farbpatronen (22, 22X, 22Y, 42, 42X, 42Y) dieselbe Druckflüssigkeit in mindestens einer Farbkammer enthalten, um den Rapid-Prototyping-Druckprozesses durchzuführen,

wobei die Druckflüssigkcit in einer der drei Farbkammern (225, 226, 227, 225x, 226x, 227y, 225y, 226y, 227y, 425, 426, 427, 425x, 426x, 427x, 425y , 426y, 427y) von jeder der mindestens zwei modularen Farbpatronen (22, 22X, 22Y, 42, 42X, 42Y) ein Flüssigkeits-Bindemittel ist und

die Druckflüssigkeiten, die in den anderen zwei der drei Farbkammern (225, 226, 227, 225x, 226x, 227x, 225y, 226y, 227y, 425m 426, 427, 425x, 426x, 427x, 425y, 426y, 427y) von jeder der mindestens zwei modularen Farbpatronen (22, 22X, 22Y, 42, 42X, 42Y) enthalten sind, Farbtinten sind.

2. Druckmodul nach Anspruch 1, wobei jede der modularen Farbpatronen (22, 22X, 22Y, 42, 42X, 42Y) weiterhin einen Identifikations-Chip (229) umfasst, der ausgelegt ist, um ein gesendetes Signal zwischen der jeweiligen modularen Farbpatrone (22, 22X, 22Y, 42, 42X, 42Y) und der Rapid-Prototyping-Vorrichtung zu erkennen und zu überwachen.

3. Druckmodul nach einem der vorhergehenden Ansprüche, wobei die jeweilige modulare Farbpatrone (22, 22X, 22Y, 42, 42X, 42Y) weiterhin einen Tintenstrahldruckchip (223, 223x, 223y, 423, 423x, 423y) aufweist, der auf einem Boden des Gehäusekörpers (221, 221x, 221y, 421) angeordnet ist, wobei der Tintenstrahlchip (223, 223x, 223y, 423,423x, 423y) eine Mehrzahl von Flüssigkeitszufuhrschlitzen (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) aufweist, und wobei jeder Flüssigkeitszufuhrschlitz (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) mit der zugeordneten Farbkammer (225, 226, 227, 225x, 226x, 227x, 225y, 226y, 227y, 425m 426, 427, 425x, 426x, 427x, 425y, 426y, 427y) verbunden ist und mit dieser Flüssigkeit austauschen kann.

4. Druckmodul nach Anspruch 4, wobei der Tintenstrahlchip (223, 223x, 223y, 423, 423x, 423y) vier Flüssigkeitszufuhrschlitze (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) aufweist, wobei zwei der Flüssigkeitszufuhrschlitze (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) mit einer der drei Farbkammern (225, 226, 227, 225x, 226x, 227x, 225y, 226y, 227y, 425, 426, 427, 425x, 426x, 427x, 425y, 426y, 427y) verbunden ist und mit dieser Flüssigkeit austauschen kann, und wobei die anderen beiden der Flüssigkeitszufuhrschlitze (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) jeweils mit den anderen beiden der drei Farbkammer (225, 226, 227, 225x, 226x, 227x, 225y, 226y, 227y, 425m 426, 427, 425x, 426x, 427x, 425y, 426y, 427y) verbunden sind und mit dieser Flüssigkeit austauschen können.

5. Druckmodul nach Anspruch 4, wobei der Tintenstrahlchip (223, 223x, 223y, 423, 423x, 423y) drei Flüssigkeitszufuhrschlitze (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) aufweist, die jeweils mit der zugeordneten Farbkammer (225,226,227,225x, 226x, 227x, 225y, 226y, 227y, 425, 426, 427, 425x, 426x, 427x, 425y, 426y, 427y) verbunden sind und mit dieser Flüssigkeit austauschen können.

**Revendications**

1. Un module d'impression (1, 2) d'un appareil de prototypage rapide comprenant:

une plate-forme d'impression (10, 20) ayant un cadre (101, 201) et un arbre d'entraînement (102, 202), dans lequel l'arbre d'entraînement (102, 202) est installé sur le cadre (101, 201);
un siège de support (11, 22) pénétré par l'arbre d'entraînement (102, 202) etdisposé sur l'arbre d'entraînement (102, 202); et

au moins deux cartouches d'encre modulaires (22, 22X, 22Y, 42, 42X, 42Y) disposées sur le siège porteur (11, 22), chacune des cartouches d'encre modulaires (22, 22X, 22Y, 42, 42X, 42Y) dispose d'un corps de boîtier (221, 221x, 221y, 421) ;

**caractérisé en ce que** chaque cartouches d'encre modulaires disposes de trois chambre d'encre (225, 226, 227, 225x, 226x, 227x, 225y, 226y, 227y, 425, 426, 427, 425x, 426x, 427x, 425y, 426y, 427y), qui sont divisées à l'intérieurs du corps de boîtier (221, 221X, 221Y, 421) pour recevoir différents liquides d'impression, respectivement, dans lequel

les corps de boîtiers (221, 221x, 221y, 421) d'au moins deux cartouches d'entre modulaires (22, 22X, 22Y, 42, 42X, 42Y) contient le même liquide d'impression dans au moins une chambre d'encre pour permettre un processus d'impression de prototypage rapide,

le liquide d'impression contenu dans l'une des trois chambres d'encre (225, 226, 227, 225x, 226x, 227x, 225y, 226y, 227y, 425, 426, 427, 425x, 426x, 427x, 425y, 426y, 427y) de chacune de deux cartouches d'encre modulaires au moins (22, 22X, 22Y, 42, 42X, 42Y) est un liant liquide, et

les liquides d'impression contenus dans les deux autres, parmi les trois chambres d'encre (225, 226, 227, 225x, 226x, 227x, 225y, 226y, 227y, 425 , 426, 427, 425x, 426x, 427x, 425y, 426y, 427y) de chacune de deux cartouches d'encre modulaires au moins (22, 22X, 22Y, 42, 42X, 42Y) sont des encres couleur.

2. Le module d'impression selon la revendication 1, dans lequel chacune des cartouches d'encre modulaires (22, 22X, 22Y, 42, 42X, 42Y) comprend en outre une puce d'identification (229) configurée pour reconnaître et surveiller un signal de transmission entre la cartouche d'encre modulaire respective (22, 22X, 22Y, 42, 42X, 42Y) et l'appareil de prototypage rapide.

3. Le module d'impression selon l'une quelconque des revendications précédentes, dans lequel la cartouche d'encre modulaire (22, 22X, 22Y, 42, 42X, 42Y) respective comprend en outre une puce de jet d'encre (223, 223x, 223y, 423, 423x, 423y, 423y, 423y, 423y, 423, 423x, 423y) disposée sur un fond du corps de boîtier (221, 221x, 221y, 421), la puce à jet d'encre (223, 223x, 223y, 423, 423x, 423y) comporte une pluralité de fentes d'alimentation en liquide (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) et chaque fente d'alimentation en liquide (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx , 424y, 424ay, 424by, 424cy) est reliée à et en communication fluidique avec la chambre d'encre correspondante (225, 226, 227, 225x, 226x, 227x, 225y, 226y, 227y, 425, 426, 427, 425x, 426x, 427x, 425y, 426y, 427y).

4. Le module d'impression la revendication 3, dans lequel la puce à jet d'encre (223, 223x, 223y, 423, 423x, 423y) comporte quatre fentes d'alimentation en liquide (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy), deux des fentes d'alimentation en liquide (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) sont connectées ensemble et en communication fluide avec l'une des trois chambres d'encre (225, 226, 227, 225x, 226x, 227x, 225y, 226y, 227y, 425, 426, 427, 425x, 426x, 427x, 425y, 426y, 427y), et les deux autres fentes d'alimentation en liquide (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424bx, 424cx, 424y, 424ay, 424by, 424cy) sont respectivement connectées à d'autres deux autres des trois chambres d'encre (225, 226, 227, 225x, 226x, 227x, 225y, 226y, 227y, 425, 426, 427, 425x, 426x, 427x, 425y, 426y, 427y).

5. Le module d'impression selon la revendication 3, dans lequel la puce à jet d'encre (223, 223x, 223y, 423, 423x, 423y) comporte trois fentes d'alimentation en liquide (224, 224a, 224b, 224c, 224d, 224x, 224ax, 224bx, 224cx, 224dx, 224y, 224ay, 224by, 224cy, 224dy, 424, 424a, 424b, 424c, 424x, 424ax, 424b, 424cx, 424y, 424ay, 424bx, 424cx, 424y, 424ay, 424by, 424cy) respectivement connectées et en communication fluidique avec la chambre d'encre correspondante (225, 226, 227, 225x, 226x, 227x, 225y, 226y, 227y, 425, 426, 427, 425x, 426x, 427x, 425y, 426y, 427y).

FIG. 1 PRIOR ART

EP 3 045 293 B1

FIG. 2

FIG. 3A

224

223

221

22

FIG. 3B

FIG. 3C

FIG. 4B

224c
224b
223

225

221

220

22

FIG. 4A

225
224

A'        A

227
221
226

22

EP 3 045 293 B1

19

FIG. 5A

FIG. 5B

FIG. 6

EP 3 045 293 B1

FIG. 7A

228b

224

223
223a

228b
224
228a

228

FIG. 7B

# FIG. 8

FIG. 9A

FIG. 9B

EP 3 045 293 B1

FIG. 9D

FIG. 9C

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110300248 A